(19) Europäisches Patentamt
European Patent Office
Office européen des brevets

(11) Veröffentlichungsnummer: **0 190 653**
**B1**

(12) **EUROPÄISCHE PATENTSCHRIFT**

(45) Veröffentlichungstag der Patentschrift: **10.10.90**

(21) Anmeldenummer: **86101136.9**

(22) Anmeldetag: **29.01.86**

(51) Int. Cl.⁵: **C 08 F 222/22,** C 08 F 246/00, C 09 D 175/14

(54) **Härtbare Copolymerisate, Verfahren zu ihrer Herstellung und ihre Verwendung.**

(30) Priorität: **08.02.85 DE 3504337**

(43) Veröffentlichungstag der Anmeldung:
**13.08.86 Patentblatt 86/33**

(45) Bekanntmachung des Hinweises auf die Patenterteilung:
**10.10.90 Patentblatt 90/41**

(84) Benannte Vertragsstaaten:
**AT BE CH DE FR GB IT LI NL SE**

(56) Entgegenhaltungen:
**DE-A-2 422 170**
**FR-A-2 193 861**
**US-A-4 126 747**

(73) Patentinhaber: **HOECHST AKTIENGESELLSCHAFT**
**Postfach 80 03 20**
**D-6230 Frankfurt am Main 80 (DE)**

(72) Erfinder: **Just, Christoph, Dr.**
**Akazienweg 8**
**D-6272 Niedernhausen/Taunus (DE)**
Erfinder: **Plath, Dieter, Dr.**
**Hildastr. 32**
**D-6200 Wiesbaden (DE)**
Erfinder: **Walz, Gerd, Dr.**
**Pfingstbornstr. 99**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Es ist bekannt, hydroxylgruppenhaltige Polyacrylverbindungen mit Polyisocyanaten oder verkappten Polyisocyanaten zu härten.

Copolymerisate von Carbamoyloxycarboxylaten, die keine Hydroxylgruppen tragen, sind ebenfalls bekannt (US 3,479,328). Um derartige Copolymerisate zu härten, werden diese mit Aldehyden modifiziert zu Verbindungen, die Alkylolgruppen tragen. Diese Alkylolgruppen können darüberhinaus auch noch veräthert werden. Die aldehydmodifizierten Polymere sind reaktiver, allerdings weniger stabil als die verätherten Polymere. Derart modifizierte Polymere können vernetzt werden durch Einsatz solcher Vernetzungsmittel, die für Alkylolgruppen enthaltende Polymerisate geeignet sind. Hierzu gehören beispielsweise Methylolphenol- und Melaminformaldehydharze, ferner Säuren wie p-Toluolsulfonsäure.

Es ist ferner bekannt (DE—PS 24 22 170), Copolymerisate aus Carbamoyloxyalkylcarbonsäureestern und copolymerisierbaren Monomeren herzustellen. Eine Härtung dieser Copolymerisate unter Einsatz von Polyisocyanaten und/oder Aminharzen ist dem Stand der Technik aber nicht zu entnehmen.

Der Erfindung lag daher die Aufgabe zugrunde, Copolymerisate herzustellen, die auf Grund der gleichzeitigen Anwesenheit von Hydroxyl- und Urethangruppen eine hohe Funktionalität und damit ein hohes Reaktionsvermögen aufweisen und sich daher durch besonders günstige Eigenschaften auszeichnen.

Gegenstand der Erfindung sind härtbare Copolymerisate auf Basis von

A) 5—95 Gew.-% mindestens eines polymerisierbaren, Hydroxylgruppen tragenden Carbamoyloxyalkyldicarbonsäureesters der allgemeinen Formel (I)

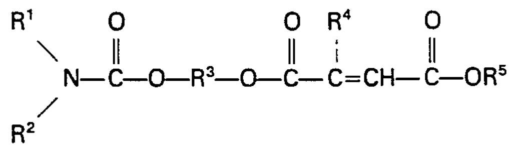

(I)

worin

$R^1$ Wasserstoff, Alkyl, Hydroxyalkyl mit jeweils 1 bis 30 C-Atomen im Alkylrest,

$R^2$ Alkyl, Hydroxyalkyl mit jeweils 1 bis 30 C-Atomen im Alkylrest, oder den Rest

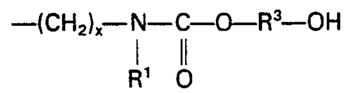

mit der Maßgabe, daß $R^1$ Wasserstoff und x eine ganze Zahl von 2 bis 10 ist,

$R^3$ lineares oder verzweigtes Alkylen mit 2 bis 5 C-Atomen,

$R^4$ Wasserstoff oder Methyl und

$R^5$ Hydroxyalkyl, Hydroxyaminoalkyl mit jeweils 2 bis 20 C-Atomen in Alkylrest oder einen solchen Alkylrest, der noch Ester- und/oder Äthergruppen enthält, darstellt, und

B) 5—95 Gew.-% mindestens eines copolymerisierbaren Monomeren aus der Gruppe

a) α,β-olefinisch ungesättigte Monocarbonsäure, und deren Alkyl- und Hydroxyalkylester mit jeweils 1 bis 18, vorzugsweise 1 bis 8 C-Atomen im Alkylrest, Amide, Nitrile, sowie Mono- und Dialkylester, α,β-olefinisch ungesättigter Dicarbonsäuren mit 1 bis 18 C-Atomen im Alkylrest,

b) vinylaromatischen Monomere,

c) Vinylester organischer Monocarbonsäure mit 1 bis 18 C-Atomen im Carbonsäurerest,

d) Glycidylester ungesättigter Mono- und/oder Dicarbonsäuren,

wobei die Summe de Komponenten A) und B) stets 100 Gew.-% beträgt.

Die Komponente B) enthält mindestens ein Monomeres, wobei die Mengenverhältnisse im allgemeinen 0—95 Gew.-% der Monomeren a), 5—100 Gew.-% der Monomeren b), 0—95 Gew.-% der Monomeren c), und 0—50 Gew.-% der Monomeren d) betragen und die Summe aller Monomeren stets 100 Gew.-% ist.

Gegenstand der Erfindung ist auch ein Verfahren zur Herstellung der Copolymerisate sowie ihre Verwendung.

Vorzugsweise bedeuten in der allgemeinen Formel (I)

$R^1$ Wasserstoff, Alkyl, Hydroxyalkyl mit jeweils 2 bis 20 C-Atomen im Alkylrest,

$R^2$ Alkyl, Hydroxyalkyl mit jeweils 2 bis 20 C-Atomen im Alkylrest, oder den Rest

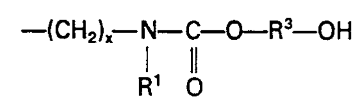

mit der Maßgabe, daß $R^1$ Wasserstoff und x eine ganze Zahl von 2—6 ist,

$R^3$ Alkylen mit 2 bis 3 C-Atomen,

$R^4$ Wasserstoff oder Methyl und

$R^5$ ein Hydroxyalkylesterrest einer verzweigten gesättigten Fettsäure mit 9 bis 11 C-Atomen im Säurerest oder Hydroxyalkyl, jeweils mit 2 bis 14 C-Atomen in der Alkylgruppe.

Die als Ausgangsmaterial dienenden Verbindungen, Carbamoyloxyalkyldicarbonsäureester der allgemeinen Formel (I) sind in der am selben Tage eingereichten Patentanmeldung EP—A—194434 "Polymerisierbare, Hydroxylgruppen tragende Carbamoyloxyalkyldicarbonsäureester, Verfahren zu ihrer Herstellung und Verwendung" beschrieben. Die Ausgangsmaterialien werden nach dem in der Parallelanmeldung genannten Verfahren hergestellt, worauf hiermit einschließlich der bevorzugten Ausführungsformen Bezug genommen wird. Für die Copolymerisation der Verbindung der Formel (I) können ein oder mehrere Monomere aus den folgenden Gruppen eingesetzt werden:

a) α,β-olefinisch ungesättigte Monocarbonsäuren, deren Alkyl- und Hydroxyalkylester mit jeweils 1 bis 18, vorzugsweise 1 bis 8 C-Atomen im Alkylrest, deren Amide und Nitrile sowie Mono- und Dialkylester α,β-olefinisch ungesättigter Dicarbonsäuren mit 1 bis 18, vorzugsweise 1 bis 8 C-Atomen im Alkylrest, wie Acrylsäure, Methacrylsäure, deren Methyl- Äthyl-, die verschiedenen Isopropyl-, die verschiedenen Butyl-, 2-Äthylhexyl-, Stearylester, vorzugsweise Acrylsäure, Acrylnitril, Acrylamid, Methylacrylat, Butylacrylat, 2-Äthylhexylacrylat, Methylmethacrylat, ferner 2-Hydroxy(meth)acrylat, 2-Hydroxypropyl(meth)acrylat, 4-Hydroxybutyl(meth)acrylat, sowie Umsetzungsprodukte von (Meth)acrylsäure mit Glycidylester von α-Alkylalkanmonocarbonsäuren der Summenformel $C_{12-14}H_{22-26}O_3$ einzeln oder im Gemisch. Dem Glycidylrest im Glycidylester der α-Alkylalkanmonocarbonsäuren und/oder α,α-Dialkylalkanmonocarbonsäuren kommt die Summenformel $C_3H_5O$ zu. Die α-Alkylalkansäuren- und α,α-Dialkylalkansäuren-Gemische stellen Monocarbonsäuren dar, die eine $C_9$-, $C_{10}$- und $C_{11}$-Kette enthalten (im folgenden Glycidylester genannt),

b) vinylaromatische Monomere wie Styrol, o- oder p-Methylstyrol, α-Methylstyrol sowie kernalkylierte Styrolderivate wie α-Methyl-p-isopropylstyrol, α-Methyl-m-isopropylstyrol, vorzugsweise aber Styrol.

c) Vinylester organischer Monocarbonsäuren mit 1 bis 18, vorzugsweise 2 bis 11 C-Atomen in der Säurekomponente wie Vinylacetat und Vinylpropionat, vorzugsweise Vinylacetat und der Vinylester der Versaticsäure und

d) Glycidylester α,β-olefinisch ungesättigter Mono- und/oder Dicarbonsäuren wie Glycidyl(meth)acrylat.

Der Anteil der Verbindungen der Formel (I) im Copolymerisat (Komponente A) beträgt 5 bis 95, vorzugsweise 10 bis 70 Gew.-%, während der Anteil der copolymerisierbaren Monomeren B) 5 bis 95, vorzugsweise 30 bis 90 Gew.-% ausmacht. Die Summe der Komponenten A) und B) beträgt stets 100%.

Als Komponente B) kann mindestens eine Verbindung der Monomeren a) bis d) eingesetzt werden. Bevorzugte Einsatzmengen sind jedoch 0 bis 95 Gew.-% der Monomeren a), 5 bis 100 Gew.-% der Monomeren b), 0 bis 95 Gew.-% der Monomeren c) und 0 bis 50 Gew.-% der Monomeren d) besteht, wobei die Summe Monomeren stets 100 Gew.-% ist.

Das Verfahren zur Herstellung der Copolymeren ist im allgemeinen gut bekannt. Vorzugsweise erfolgt die Polymerisation nach den Radikalkettenmechanismus in Gegenwart freie Radikale liefernder Substanzen. Hierfür kommen anorganische Perverbindungen wie Kalium- oder Ammoniumpersulfat, Alkali-Percarbonate, organische Peroxydverbindungen wie Acylperoxyde, beispielsweise Benzoylperoxyd, Dibenzoylperoxyd, Di-tert.-butylperoxyd, Dilaurylperoxyd, Dicumylperoxyd, tert-.Butylperbenzoat, Alkylhydroperoxyde wie tert.-Butylhydroperoxyd, Cumolhydroperoxyd, tert.-Butylhydroperoxyd, ferner tert.-Butylperoctoat oder Azoverbindungen wie α,α-Azobisisobutyronitril sowie Peroxydicarbonate wie Dicyclohexyl und Dicetylperoxydicarbonat in Betracht. Die Katalysatormenge liegt innerhalb der üblicherweise in Frage kommenden Grenzen, d.h. etwa zwischen 0,01 und 5, vorzugsweise 0,01 und 2 Gew.-%, berechnet auf die Gesamtmenge der Monomeren. In zahlreichen Fällen kann es auch wünschenswert sein, der Polymerisatmischung Molekulargewichtsregler wie Kettenübertragungsmittel oder Kettenabbrecher zuzufügen. Üblicherweise werden Mercaptane wie Dodecylmercaptan für diesen Zweck benutzt, doch können auch andere, die Kettenlänge modifizierende Mittel zugegeben werden wie Cyclopentadien, Allylcarbamat, dimerisiertes α-Methylstyrol und ähnliche Mittel, die zur Bildung von Polymeren mit niedrigem Molekulargewicht führen. Von diesen Verbindungen werden im allgemeinen 0,01 bis 2, vorzugsweise 0,01 bis 1 Gew.-%, bezogen auf die Gesamtmenge der Monomeren, zugegeben.

Die Polymerisation kann ein- oder mehrstufig bei Temperaturen von 20 bis 270, vorzugsweise 60 bis 180°C, gegebenenfalls unter Druck erfolgen, und zwar nach den üblichen Methoden der Substanz-, Lösungs-, Fällungs-, Dispersions-, Emulsions- oder Perlpolymerisation. Bevorzugt sind die Substanz-, Lösungs- und Emulsionspolymerisation, insbesondere die Lösungspolymerisation. Wird in Lösung polymerisiert, so kommen die üblicherweise verwendeten Lösemittel zum Einsatz wie halogenierte Kohlenwasserstoffe, beispielsweise Methylenchlorid, Trichloräthylen, Tetrachloräthan, Ketone wie Aceton, Methyläthylketon, Ester wie Butylacetat, Äthylglykolacetat, Methylglykolacetat, Äthylenglykolbismethyläther, Diäthylenglykolbismethyläther, aromatische Kohlenwasserstoffe wie Toluol und Xylol, jeweils einzeln oder gemischt. Ein bevorzugtes Lösemittel ist Xylol, vorzugsweise in Mischung mit einem aromatischen Lösemittel mit einem Siedebereich von 154 bis 178°C (Solveso 100, Shell AG) und Butylacetat.

Die gebildeten Copolymerisat weisen im allgemeinen OH- Zahlen von 30 bis 200, vorzugsweise 45 bis 180, insbesondere 50 bis 140, auf. Die Säurezahlen der Copolymerisate sind im allgemeinen $< 15$, vorzugsweise $< 9$. Die Viskosität der Copolymerisate beträgt im allgemeinen bei 20°C 200 bis 3000,

vorzugsweise 400 bis 2500 mPa·s. Die Werte wurden aus den anfallenden Lösungen der Copolymerisate ermittelt, die mit Xylol auf einen Festkörpergehalt von 50 Gew.-% verdünnt wurden (im folgenden "20°C, 50%ig in Xylol" bezeichnet).

Die erfindungsgemäßen Copolymerisate sind mit den üblichen, für CH-gruppenhaltige Polymere verwendbaren Verbindungen härtbar. Besonders geeignet sind Verbindungen mit endständigen Isocyanatgruppen. Verbindungen dieser Art sind z.B. Polyisocyanate, wie die aliphatischen Trimethylen-, Tetramethylen-, Pentamethylen-, Hexamethylen, 1,2-Propylen-, 1,2-Butylen-, 2,3-Butylen-, 1,3-Butylen-, Äthylidin- und Butylidindiisocyanate, Dicycloalkylendiisocyanate wie 1,3-Cyclopentan-, 1,4-Cyclopentan- und 1,2-Cyclohexandiisocyanate, sowie Isophoron- und Hexamethylendiisocyanat, die aromatischen Diisocyanate, wie m-Phenylen-, p-Phenylen, 4,4'-Diphenyl-, 1,5-Naphthalin- und 1,4-Naphthalindiisocyanate, die aliphatisch-aromatischen Diisocyanate wie 4,4'-Diphenylenmethan-, 2,4- oder 2,6-Toluylen (oder ihre Mischungen), 4,4'-Toluidin- und 1,4-Xylilendiisocyanate, die kernsubstituierten aromatischen Verbindungen wie Dianisidindiisocyanat, 4,4'-Diphenylätherdiisocyanat und Chlordiphenylendiisocyanat, die Triisocyanate wie Triphenylmethan-4,4'-, 4''-Triisocyanat, 1,3,5-Benzoltriisocyanat und 2,4,6-Toluoltriisocyanat und die Tetraisocyanate, wie 4,4'-Diphenyldimethyldimethan-2,2'-5,5'-tetraisocyanat.

An Stelle der Polyisocyanate können auch Polyisocyanate abspaltende Verbindungen Verwendung finden, ferner Isocyanatgruppen enthaltende Umsetzungsprodukte mehrwertiger Alkohole mit Polyisocyanaten, beispielsweise das Umsetzungsprodukt von 1 Mol Trimethylolpropan mit 3 Mol Toluylendiisocyanat, ferner die polymerisierten Polyisocyanate, wie das Dimere von Tolylendiisocyanat und dergleichen, oder auch trimerisierte oder polymerisierte Isocyanate, wie sie etwa in der deutschen Patentschrift 951 168 beschrieben sind. Außerdem kommit auch ein Umsetzungsprodukt aus 1 Mol Wasser und 3 Mol Hexamethylendiisocyanat mit einem NCO-Gehalt von 16—17 Gew.-% in Frage. Besonders bevorzugt ist das zuletzt genannte Umsetzungsprodukt aus Wasser und Hexamethylendiisocyanat. Der NCO-Gehalt des Umsetzungsproduktes gilt für eine 75 gew.-%ige Lösung in Xylol/Äthylenglykolacetat.

Für die Härtung der erfindungsgemäßen Polymerisate sind auch Aminharze geeignet. Als Beispiel seien Amin-aldehydharze, d.h. Aldehydkondensationsprodukte von Melamin, Harnstoff, Acetoguanamin oder ähnlichen Verbindungen genannt. Bevorzugte Aldehydkondensationsprodukte des Melamins schließen Hexamethoxymethylmelamin, Hexakis(methoxymethyl)melamin, Äthoxymethoxymethylmelamin, 6-fach methyliertes Methylolmelamin und dergleichen und ferner auch Benzylharnstoff und Benzoguanamin ein.

Die Menge der eingesetzten Vernetzungsmittel richtet sich nach der OH-Zahl der erfindungsgemäßen Copolymerisate. Im allgemeinen werden äquimolare Mengen eingesetzt.

Die Härtung erfolgt im allgemeinen bei einer Temperatur zwischen 0 und 260°C, vorzugsweise 20 bis 150°C. sie ist abhängig von der Härtungszeit. Vorzugsweise arbeitet man aber bei niedrigen Temperaturen.

Die erfindungsgemäß hergestellten Copolymerisate besitzen auf Grund ihrer verschiedenen funktionellen Gruppen ausgezeichnete Eigenschaften. Sie zeigen überraschenderweise eine sehr gute Chemikalienbeständigkeit bei verhältnismäßig niedriger Hydroxylzahl, z.B. gegeüber Benzin, während die bekannten Polyacrylharze im allgemeinen erst bei OH-Zahlen von mindestens 120 eine ausreichende chemische Beständigkeit erreichen. Weiterhin besitzen die erfindungsgemäßen Copolymerisate eine hohe Flexibilität, Zähigkeit, Elastizität und eine gute Haftung, so daß sie gegenbenenfalls auch in Klebstoffmischungen eingesetzt werden können.

Die erfindungsgemäßen Copolymerisate können eine vielseitige technische Verwendung finden, z.B. zur Herstellung von Formkörpern und/oder Überzügen. Durch die Gegenwart von Urethangruppen bewirken sie eine sehr gute Haftung auf Unterlagen. Aus diesem Grund sind sie beispielsweise für Aus- und Verkleidungen, z.B. für Gefäße in der chemischen Industrie und für der Bewitterung ausgesetzte Gegenstände geeignet. Als Anstsrichmittel und Überzüge werden sie vor allem für Fahrzeugteile, insbesondere für Kraftfahrzeuge, Industrielacke, Haushaltsgeräte, Möbel, im Bauwesen oder dergleichen eingesetzt. Den Überzugsmassen können auch Pigmente und andere übliche Zusätze zugegeben werden. So finden sie beispielsweise als Bindemittel für pigmentierte und klare Grundier- und/oder Decklacke Verwendung; ferner können sie auch bei integrierten Kunststoff-Metall-Lackierungen eingesetzt werden.

In den nachfolgenden Beispielen bedeuten T Gewichtsteile und % Gewichtsprozent.

## Beispiele

### Ausgangsstoffe

Die Herstellung der als Ausgangsmaterial dienenden, Hydroxylgruppen tragenden Carbamoyloxyalkyldicarbonsäureester, die in Tabelle I dargestellt sind, kann nach den Vorschriften

durchgeführt werden, wie sie in der bereits erwähnten deutschen Patentanmeldung P 35 04 336.9 beschrieben ist.

TABELLE 1

| Verbindung | |
|---|---|
| A | 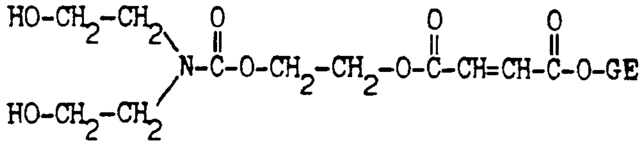 |
| B | 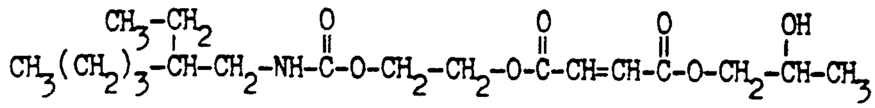 |
| C | 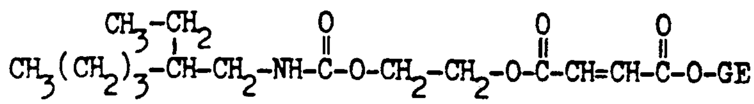 |
| D | 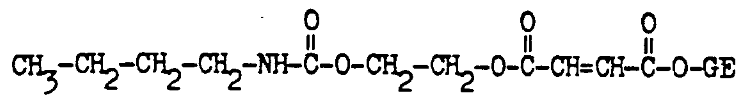 |
| E | 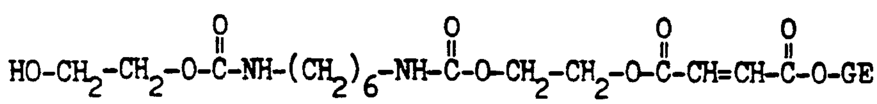 |
| F | 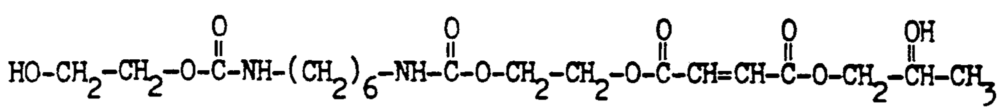 |

GE = Glycidylester

1—7

Es wurden die in Tabelle I aufgeführten Verbindungen in einem Lösemittelgemisch aus Xylol, einem aromatischen Kohlenwasserstoffgemisch mit einem Siedepunkt von 154 bis 178°C und Butylacetat (2:1:1) unter Stickstoff und unter Rühren mit den in Tabelle 2 aufgeführten Monomeren copolymerisiert. Dazu wurden entweder die Verbindungen der Tabelle 1 mit dem Lösemittelgemsich vorgelegt und auf 140°C erwärmt, worauf innerhalb drei Stunden nach Maßgabe der exothermen Reaktion das zugegebene Monomerengemisch 1 zudosiert wurde. Die erste Stufe der Copolymerisation läßt sich auch derart ausführen, daß ein Teil des Lösemittelgemisches vorgelegt wird und die Monomerenmischung I aus dem

Restlösemittel, Monomeren und Verbindungen der Tabelle 1 und weiteren Zusätzen besteht (Beispiel 3). Auch in diesem Falle wird die Monomerenmischung I in das auf 140°C erwärmte Lösemittelgemisch eingetropft.

Nach Zugabe der Gesamtmenge der Monomerenmischung I wurde bei 140°C innerhalb von 4 Stunden die Monomerenmischung II zugegeben und nach Beendigung der Zugabe der Ansatz für eine Stunde bei 140°C belassen.

In der Tabelle 2 sind Angaben der erhaltenen Copolymerisate bezüglich OH-Zahl, Säurezahl, Festkörper und Viskosität, 20°C (50%ig in Xylol) angeführt.

8 und 9

Die Verfahrensweise der Beispiele 1 bis 7 wurde mit den Verbindungen E und F der Tabelle 1 durchgeführt, mit dem Unterschied, daß die Copolymerisationstemperatur 150°C betrug und als Lösemittel Äthylglykolacetat eingesetzt wurde. Die Angaben über die verwendeten Monomeren, Mengenverhältnisse sowie physikalische Daten der erhaltenen Copolymerisate sind in Tabelle 2 angeführt.

TABELLE 2

| | | 1 | 2 | 3 | 4 | 5 | 6 | 7 | 8 | 9 |
|---|---|---|---|---|---|---|---|---|---|---|
| Lösemittel | T | 1200 | 200 | 333 | 1200 | 500 | 500 | 1000 | 233 | 113 |
| Verbindung Tab. 1 | | A | B | C | C | B | B | C | E | F |
| Menge | T | 644 | 217 | 305 | 644 | 197 | 281 | 473 | 185 | 49 |
| Monomerenmischung I | | | | | | | | | | |
| Lösemittel | T | — | 100 | 167 | — | — | — | 200 | 100 | 66 |
| Styrol | T | 57,2 | 22,2 | 27 | 57,2 | 31,6 | 151 | 76 | 17,5 | 5 |
| DTDBP | T | 9,2 | 2,25 | 3,75 | 9,2 | 3,75 | 3,75 | 9 | 2,5 | 1,5 |
| DDM | T | 6,0 | 1,35 | 2,25 | 6,0 | 2,25 | 2,25 | 5,4 | 1,5 | 0,9 |
| Monomerenmischung II | | | | | | | | | | |
| Styrol | | 696 | 200 | 269 | 696 | 348 | 46 | 835 | 65 | 138 |
| MMA | T | 272 | 28,4 | 116 | 272 | 137 | 196 | 330 | 60 | 90 |
| HEMA | T | 80 | 34,5 | 34 | 8,0 | 36 | 76 | 86 | 39 | 38 |
| DTDBP | T | 9,2 | 2,25 | 3,75 | 9,2 | 3,75 | 3,75 | 9 | 2,5 | 1,5 |
| DDM | T | 6,0 | 1,35 | 2,25 | 6,0 | 2,25 | 2,25 | 5,4 | 1,5 | 0,9 |
| OH-Zahl | | 123 | 100 | 60 | 60 | 60 | 100 | 51 | 140 | 71 |
| SZ-Zahl | | 5,3 | 2,0 | 5,0 | 9 | 4,8 | 4,6 | 3,1 | 8,1 | 3,0 |
| Festkörper (1h/125°C) | | 60 | 60 | 59,6 | 59,3 | 59,8 | 58,2 | 59,9 | 53 | 60 |
| Viskosität (20°, 50% in Xylol, mPa·s) | | 490 | 2300 | 454 | 1053 | 842 | 1310 | 575 | — | 965 (in EGA) |

DTDBP = Di-tert.-dibutylperoxid
DDM = Dodecylmercaptan
MMA = Methylmethacrylat
HEMA = Hydroxyäthylmethacrylat
EGA = Äthylglykolacetat

**Patentansprüche für die Vertragsstaaten: BE CH DE FR GB IT LI NL SE**

1. Härtbare Copolymerisate auf Basis von

A) 5—95 Gew.-% mindestens eines polymerisierbaren, Hydroxylgruppen tragenden Carbamoyloxyalkyldicarbonsäureesters der allgemeinen Formel (I)

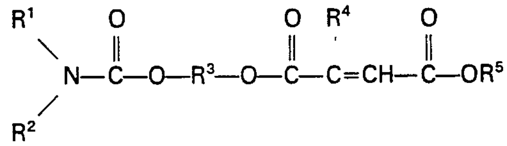 (I)

worin

$R^1$ Wasserstoff, Alkyl, Hydroxyalkyl mit jeweils 1 bis 30 C-Atomen im Alkylrest,

$R^2$ Alkyl, Hydroxyalkyl mit jeweils 1 bis 30 C-Atomen im Alkylrest, oder den Rest

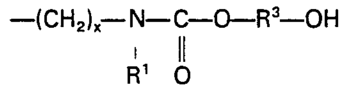

mit der Maßgabe, daß $R^1$ Wasserstoff und x eine ganze Zahl von 2 bis 10 ist,

$R^3$ lineares oder verzweigtes Alkylen mit 2 bis 5 C-Atomen,

$R^4$ Wasserstoff oder Methyl und

$R^5$ Hydroxyalkyl, Hydroxyaminoalkyl mit jeweils 2 bis 20 C-Atomen in Alkylrest oder ein solcher Alkylrest, der noch Ester- und/oder Äthergruppen enthält, darstellt, und

B) 5—95 Gew.-% mindestens eines copolymerisierbaren Monomeren aus der Gruppe

a) α,β-olefinisch ungesättigte Monocarbonsäure, und deren Alkyl- und Hydroxyalkylester mit jeweils 1 bis 18 C-Atomen im Alkylrest, Amide, Nitrile sowie Mono- und Dialkylester, α,β-olefinisch ungesättigter Dicarbonsäuren mit 1 bis 18 C-Atomen im Alkylrest,

b) vinylaromatische Monomere,

c) Vinylester organischer Monocarbonsäure mit 1 bis 18 C-Atomen im Carbonsäurerest,

d) Glycidylester ungesättigter Mono- und/oder Dicarbonsäuren,

wobei die Summe de Komponenten A) und B) stets 100 Gew.-% beträgt.

2. Verfahren zur Herstellung der Copolymerisate gemäß Anspruch 1, dadurch gekennzeichnet, daß

A) 5—95 Gew.-% mindestens eines polymerisierbaren, Hydroxylgruppen tragenden Carbamoyloxyalkyldicarbonsäureesters der allgemeinen Formel (I)

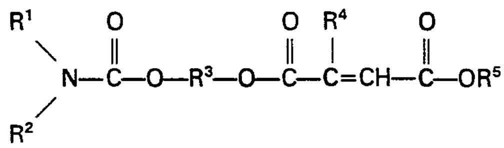 (I)

worin

$R^1$ Wasserstoff, Alkyl, Hydroxyalkyl mit jeweils 1 bis 30 C-Atomen im Alkylrest,

$R^2$ Alkyl, Hydroxyalkyl mit jeweils 1 bis 30 C-Atomen im Alkylrest, oder den Rest

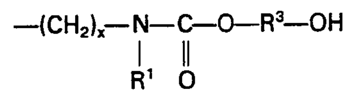

mit der Maßgabe, daß $R^1$ Wasserstoff und x eine ganze Zahl von 2 bis 10 ist,

$R^3$ lineares oder verzweigtes Alkylen mit 2 bis 5 C-Atomen,

$R^4$ Wasserstoff oder Methyl und

$R^5$ Hydroxyalkyl, Hydroxyaminoalkyl mit jeweils 2 bis 20 C-Atomen in Alkylrest oder ein solcher Alkylrest, der noch Ester- und/oder Äthergruppen enthält, darstellt, und

B) 5—95 Gew.-% mindestens eines copolymerisierbaren Monomeren aus der Gruppe

a) α,β-olefinisch ungesättigte Monocarbonsäure, und deren Alkyl- und Hydroxyalkylester mit jeweils 1 bis 18, vorzugsweise 1 bis 8 C-Atomen im Alkylrest, Amide, Nitrile sowie Mono- und Dialkylester, α,β-olefinisch ungesättigter Dicarbonsäuren mit 1 bis 18 C-Atomen im Alkylrest,

b) vinylaromatische Monomere,

c) Vinylester organischer Monocarbonsäuren mit 1 bis 18 C-Atomen im Carbonsäurerest

d) Glycidylester ungesättigter Mono- und/oder Dicarbonsäuren,

wobei die Summe de Komponenten A) und B) stets 100 Gew.-% beträgt, in Gegenwart von

C) Polymerisationskatalysatoren und gegebenenfalls

D) Molekulargewichtsreglern copolymerisiert werden.

3. Verfahren zur Herstellung der Copolymerisate nach Anspruch 2, dadurch gekennzeichnet, daß die Polymerisationstemperatur 20 bis 270, vorzugsweise 60 bis 180°C beträgt.

4. Verfahren nach Anspruch 2 oder 3, dadurch gekennzeichnet, daß die Polymerisationskatalysatoren

Mengen von 0,01 bis 5, vorzugsweise 0,01 bis 2 und D) Molekulargewichtsregler in Mengen von 0,01 bis 2, vorzugsweise 0,01 bis 1 Gew.-% eingesetzt werden berechnet auf die Gesamtmenge der Monomeren.

5. Ausführungsform nach einem oder mehreren der Ansprüche 1 bis 4, dadurch gekennzeichnet, daß der Anteil der Komponente A) 10 bis 70 Gew.-% und der der Komponente B) 30 bis 90 Gew.-% beträgt.

6. Ausführungsform nach einem oder mehreren der Ansprüche 1 bis 5, dadurch gekennzeichnet, daß die Monomeren der Komponente B) zu 0 bis 95 Gew.-% der Monomeren a), 5 bis 100 Gew.-% der Monomeren b), 0 bis 95 Gew.-% der Monomeren c) und 0 bis 50 Gew.-% der Monomeren d) besteht, wobei die Summe der Monomeren stets 100 Gew.-% ist.

7. Ausführungsform nach einem oder mehreren der Ansprüche 1 bis 6, dadurch gekennzeichnet, daß die Komponente A) eine Verbindung der Formel I ist, in der

$R^1$ Wasserstoff, Alkyl, Hydroxyalkyl mit jeweils 2 bis 20 C-Atomen im Alkylrest,

$R^2$ Alkyl, Hydroxyalkyl mit jeweils 2 bis 20 C-Atomen im Alkylrest, oder den Rest

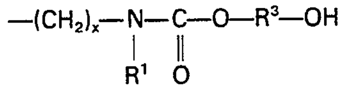

mit der Maßgabe, daß $R^1$ Wasserstoff und x eine ganze Zahl von 2—6 ist,

$R^3$ Alkylen mit 2 bis 3 C-Atomen,

$R^4$ Wasserstoff oder Methyl und

$R^5$ ein Hydroxyalkylesterrest einer verzweigten gesättigten Fettsäure mit 9 bis 11 C-Atomen im Säurerest oder Hydroxyalkyl, jeweils mit 2 bis 14 C-Atomen in der Alkylgruppe bedeutet.

8. Ausführungsform nach einem oder mehreren der Ansprüche 1 bis 7, dadurch gekennzeichnet, daß die Komponente B) aus mindestens einem copolymeriserbaren Monomeren a) α,β-olefinisch ungesättigte Monocarbonsäuren und deren Alkyl- und Hydroxyalkylester mit jeweils 1 bis 1 bis 8 C-Atomen im Alkylrest, Mono- oder Dialkylester α,β-olefinisch ungesättigte Dicarbonsäuren mit 1 bis 8 C-Atomen im Alkylrest, b) mindestens einem vinylaromatischen Monomeren und c) mindestens einem Vinylester organischer Monocarbonsäuren mit 2 bis 11 C-Atomen in der Säurekomponente besteht.

9. Ausführungsform nach Anspruch 8, dadurch gekennzeichnet, daß die Komponente B) aus mindestens einer copolymerisierbaren Verbindung der Gruppe Acrylsäure, 2-Äthylhexylacrylat, Methylmethacrylat, Hydroxyäthylmethacrylat, Styrol, Vinylacetat und dem Vinylester der Versäticsäure besteht.

10. Ausführungsform nach einem oder mechreren der Ansprüche 1 bis 9, dadurch gekennzeichnet, daß die Copolymerisate OH-Zahlen von 30 bis 200, vorzugsweise 45 bis 180, insbesondere 50 bis 140 aufweisen und die Viskosität als 50%ige Lösung 200 bis 3000, vorzugsweise 400 bis 2500 mPa·s beträgt.

11. Verwendung der Copolymerisate gemäß Anspruch 1 zur Herstellung von Formkörpern und/oder Überzügen.

12. Verwendung gemäß Anspruch 11 als Fahrzeuglacke.

**Patentansprüche für den Vertragsstaat: AT**

1. Verfahren zur Herstellung von härtbaren Copolymerisaten, dadurch gekennzeichnet, daß

A) 5—95 Gew.-% mindestens eines polymerisierbaren, Hydroxylgruppen tragenden Carbamoyloxyalkyldicarbonsäureesters der allgemeinen Formel (I)

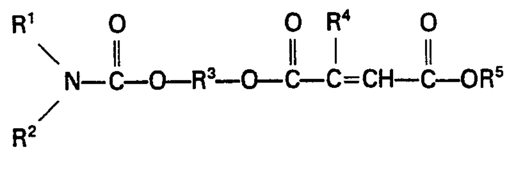 (I)

worin

$R^1$ Wasserstoff, Alkyl, Hydroxyalkyl mit jeweils 1 bis 30 C-Atomen im Alkylrest,

$R^2$ Alkyl, Hydroxyalkyl mit jeweils 1 bis 30 C-Atomen im Alkylrest, oder den Rest

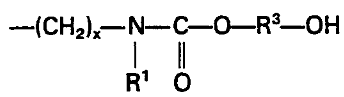

mit der Maßgabe, daß $R^1$ Wasserstoff und x eine ganze Zahl von 2 bis 10 ist,

$R^3$ lineares oder verzweigtes Alkylen mit 2 bis 5 C-Atomen,

$R^4$ Wasserstoff oder Methyl und

$R^5$ Hydroxyalkyl, Hydroxyaminoalkyl mit jeweils 2 bis 20 C-Atomen in Alkylrest oder einen solchen Alkylrest, der noch Ester- und/oder Äthergruppen enthält, darstellt, und

B) 5—95 Gew.-% mindestens eines copolymerisierbaren Monomeren aus der Gruppe

a) α,β-olefinisch ungesättigte Monocarbonsäure, und deren Alkyl- und Hydroxyalkylester mit jeweils 1 bis 18, vorzugsweise 1 bis 8 C-Atomen im Alkylrest, Amide, Nitrile, sowie Mono- und Dialkylester, α,β-olefinisch ungesättigter Dicarbonsäuren mit 1 bis 18 C-Atomen im Alkylrest,

b) vinylaromatische Monomere

c) Vinylester organischer Monocarbonsäure n mit 1 bis 18 C-Atomen im Carbonsäurerest

d) Glycidylester ungesättigter Mono- und/oder Dicarbonsäuren,

wobei die Summe der Monomeren A) und B) stets 100 Gew.-% beträgt, in Gegenwart von

C) Polymerisationskatalysatoren und gegebenenfalls

D) Molekulargewichtsreglern copolymerisiert werden.

2. Verfahren zur Herstellung der Copolymerisate nach Anspruch 1, dadurch gekennzeichnet, daß die Polymerisationstemperatur 20 bis 270, vorzugsweise 60 bis 180°C beträgt.

3. Verfahren nach Anspruch 1 oder 2, dadurch gekennzeichnet, daß die Polymerisationskatalysatoren Mengen von 0,01 bis 5, vorzugsweise 0,01 bis 2 und D) Molekulargewichtsregler in Mengen von 0,01 bis 2, vorzugsweise 0,01 bis 1 Gew.-% eingesetzt werden berechnet auf die Gesamtmenge der Monomeren.

4. Verfahren nach einem oder mehreren der Ansprüche 1 bis 3, dadurch gekennzeichnet, daß der Anteil der Komponente A) 10 bis 70 Gew.-% und der der Komponente B) 30 bis 90 Gew.-% beträgt.

5. Ausführungsform nach einem oder mehreren der Ansprüche 1 bis 4, dadurch gekennzeichnet, daß die Monomeren der Komponente B) zu 0 bis 95 Gew.-% der Monomeren a), 5 bis 100 Gew.-% der Monomeren b), 0 bis 95 Gew.-% der Monomeren c) und 0 bis 50 Gew.-% der Monomeren d) besteht, wobei die Summe der Monomeren stets 100 Gew.-% ist.

6. Verfahren nach einem oder mehreren der Ansprüche 1 bis 5, dadurch gekennzeichnet, daß die Komponente A) eine Verbindung der Formel I ist, in der

$R^1$ Wasserstoff, Alkyl, Hydroxyalkyl mit jeweils 2 bis 20 C-Atomen im Alkylrest,

$R^2$ Alkyl, Hydroxyalkyl mit jeweils 2 bis 20 C-Atomen im Alkylrest, oder den Rest

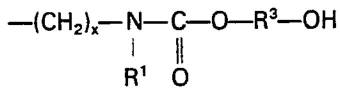

mit der Maßgabe, daß $R^1$ Wasserstoff und x eine ganze Zahl von 2—6 ist,

$R^3$ Alkylen mit 2 bis 3 C-Atomen,

$R^4$ Wasserstoff oder Methyl und

$R^5$ ein Hydroxyalkylesterrest einer verzweigten gesättigten Fettsäure mit 9 bis 11 C-Atomen im Säurerest oder Hydroxyalkyl, jeweils mit 2 bis 14 C-Atomen in der Alkylgruppe bedeutet.

7. Verfahren nach einem oder mehreren der Ansprüche 1 bis 6, dadurch gekennzeichnet, daß die Komponente B) aus mindestens einem copolymerisierbaren Monomeren a) α,β-olefinisch ungesättigte Monocarbonsäuren und deren Alkyl- und Hydroxyalkylester mit jeweils 1 bis 8 C-Atomen im Alkylrest, Mono- oder Dialkylester α,β-olefinisch ungesättigte Dicarbonsäuren mit 1 bis 8 C-Atomen im Alkylrest, mindestens einem vinylaromatischen Monomeren und c) mindestens einem Vinylester organischer Monocarbonsäuren mit 2 bis 11 C-Atomen in der Säurekomponente besteht.

8. Verfahren nach Anspruch 7, dadurch gekennzeichnet, daß die Komponente B) aus mindestens einer copolymerisierbaren Verbindung der Gruppe Acrylsäure, 2-Äthylhexylacrylat, Methylmethacrylat, Hydroxyäthylmethacrylat, Styrol, Vinylacetat und dem Vinylester der Versäticsäure besteht.

9. Verfahren nach einem oder mechreren der Ansprüche 1 bis 8, dadurch gekennzeichnet, daß die Copolymerisate OH-Zahlen von 30 bis 200, vorzugsweise 45 bis 180, insbesondere 50 bis 140 aufweisen und die Viskosität als 50%ige Lösung 200 bis 3000, vorzugsweise 400 bis 2500 mPa·s beträgt.

10. Verwendung der Copolymerisate, erhalten nach Anspruch 1 zur Herstellung von Formkörpern und/oder Überzügen.

11. Verwendung gemäß Anspruch 10 als Fahrzeuglacke.

**Revendications pour les Etats contractants: BE CH DE FR GB IT LI NL SE**

1. Copolymères durcissables à base:

A) de 5 à 95% en poids d'au moins un ester d'acide carbamoyloxy-alkyl-dicarboxylique polymérisable qui porte des radicaux hydroxy et qui répond à la formule générale I:

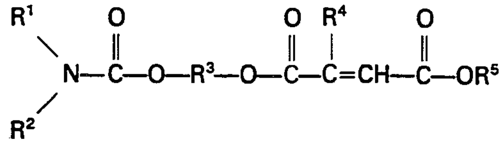

(I)

dans laquelle:

$R^1$ représente l'hydrogène, un alkyle où un hydroxyalkyle, chacun de ces radicaux contenant de 1 à 30 atomes de carbone dans la partie alkyle,

$R^2$ représente un alkyle, un hydroxyalkyle, chacun de ces radicaux contenant de 1 à 30 atomes de carbone dans la partie alkyle, ou un radical

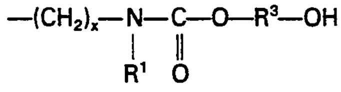

avec la condition que $R^1$ représente l'hydrogène et x un nombre entier de 2 à 10,

$R^3$ représente un alkylène linéaire ou ramifié qui contient de 2 à 5 atomes de carbone,

$R^4$ représente l'hydrogène ou un méthyle,

$R^5$ représente un hydroxyalkyle, un hydroxyamino-alkyle, chacun de ces radicaux contenant de 2 à 20 atomes de carbone dans la partie alkyle, ou un radical alkyle de ce genre qui contient également des radicaux d'esters et/ou d'éthers, et

B) de 5 à 95% en poids d'au moins un monomère copolymérisable pris dans l'ensemble constitué par

a) les acides monocarboxyliques à double liaison éthylénique en α,β, leurs esters alkyliques et hydroxyalkyliques qui contiennent chacun, dans la partie alkyle, de 1 à 18 atomes de carbone, leurs amides, leurs nitriles, ainsi que les esters monoalkyliques et dialkyliques d'acides dicarboxyliques à double liaison éthylénique en α,β qui contiennent de 1 à 18 atomes de carbone dans la partie alkyle,

b) les monomères vinyl-aromatiques,

c) les esters vinyliques des acides monocarboxyliques organiques qui contiennent de 1 à 8 atomes de carbone dans le radical d'acide carboxylique,

d) les esters glycidyliques des acides monocarboxyliques insaturés et des acides dicarboxyliques insaturés

la somme des proportions des composantes A) et B) étant toujours égale à 100% en poids.

2. Procédé pour préparer les copolymères de la revendication 1, procédé caractérisé en ce qu'on copolymérise:

A) de 5 à 95% en poids d'au moins un ester d'acide carbamoyloxy-alkyl-dicarboxylique polymérisable qui porte des radicaux hydroxy et qui répond à la formule générale I:

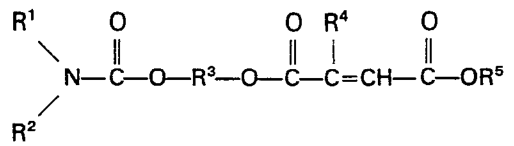

(I)

dans laquelle:

$R^1$ représente l'hydrogène, un alkyle où un hydroxyalkyle, chacun de ces radicaux contenant de 1 à 30 atomes de carbone dans la partie alkyle,

$R^2$ représente un alkyle, un hydroxyalkyle, chacun de ces radicaux contenant de 1 à 30 atomes de carbone dans la partie alkyle, ou un radical

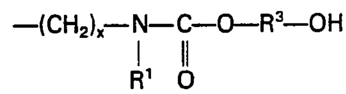

avec la condition que $R^1$ représente l'hydrogène et x un nombre entier de 2 à 10,

$R^3$ représente un alkylène linéaire ou ramifié qui contient de 2 à 5 atomes de carbone,

$R^4$ représente l'hydrogène ou un méthyle,

$R^5$ représente un hydroxyalkyle, un hydroxyamino-alkyle, chacun de ces radicaux contenant de 2 à 20 atomes de carbone dans la partie alkyle, ou un radical alkyle de ce genre qui contient également des radicaux d'esters et/ou d'éthers, et

B) de 5 à 95% en poids d'au moins un monomère copolymérisable pris dans l'ensemble constitué par

a) les acides monocarboxyliques à double liaison éthylénique en α,β, leurs esters alkyliques et hydroxyalkyliques qui contiennent chacun, dans la partie alkyle, de 1 à 18 atomes de carbone, leurs amides, leurs nitriles, ainsi que les esters monoalkyliques et dialkyliques d'acides dicarboxyliques à double liaison éthylénique en α,β qui contiennent de 1 à 18 atomes de carbone dans la partie alkyle,

b) les monomères vinyl-aromatiques,

c) les esters vinyliques des acides monocarboxyliques organiques qui contiennent de 1 à 8 atomes de carbone dans le radical d'acide carboxylique,

d) les esters glycidyliques des acides monocarboxyliques insaturés et des acides dicarboxyliques insaturés

la somme des proportions des composantes A) et B) étant toujours égale à 100% en poids, en présence:

C) de catalyseurs de polymérisation et éventuellement:

D) de régulateurs de masse moléculaire.

3. Procédé pour préparer les copolyméres selon la revendication 2, procédé caractérisé en ce que la température de polymérisation est comprise entre 20 et 270°C, de préférence entre 60 et 180°C.

4. Procédé selon l'une des revendications 2 et 3, caractérisé en ce que les catalyseurs de polymérisation sont mis en jeu en des quantités de 0,01 à 5%, de préférence de 0,01 à 2%, et les régulateurs de masse moléculaires D) en des quantités de 0,01 à 2%, de préférence de 0,01 à 1%, en poids par rapport à la quantité totale des monomères.

5. Mode d'exécution selon l'une quelconque des revendications 1 à 4, caractérisé en ce que la proportion de la composante A) est de 10 à 70% en poids, et celle de la composante B) de 30 à 90% en poids.

6. Mode d'exécution selon l'une quelconque des revendications 1 à 5, caractérisé en ce que les

monomères de la composante B) sont constitués de 0 à 95% en poids de monomères a), de 5 à 100% en poids de monomères b), de 0 à 95% en poids de monomères c) et de 0 à 50% en poids de monomères d), la somme des proportions des monomères étant toujours égale à 100%.

7. Mode d'exécution selon l'une quelconque des revendications 1 à 6, caractérisé en ce que la composante A) est un composé de formule I dans lequel:

$R^1$ représente l'hydrogène, un alkyle, un hydroxyalkyle, chacun de ces radicaux contenant de 2 à 20 atomes de carbone dans la partie alkyle,

$R^2$ représente un alkyle, un hydroxyalkyle, chacun de ces radicaux contenant de 2 à 20 atomes de carbone dans la partie alkyle, ou un radical

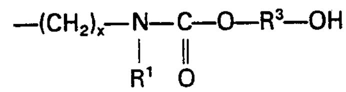

avec la condition que $R^1$ représente l'hydrogène et que x désigne un nombre entier de 2 à 6,

$R^3$ représente un alkylène contenant 2 ou 3 atomes de carbone,

$R^4$ représente l'hydrogène ou un méthyle,

$R^5$ représente un radical d'ester hydroxyalkylique qui dérive d'un acide gras saturé ramifié et dont le radical d'acide contient de 9 à 11 atomes de carbone, ou représente un hydroxyalkyle, chacun de ces radicaux contenant de 2 à 14 atomes de carbone dans la partie alkyle.

8. Mode d'exécution selon l'une quelconque des revendications 1 à 7, caractérisé en ce que la composante B) est constituée d'au moins un monomère copolymérisable pris dans l'ensemble comprenant: a) des acides monocarboxyliques à double liaison éthylénique en α,β et leurs esters alkyliques et hydroxyalkyliques à alkyle en $C_1$—$C_8$, des esters monoalkyliques ou dialkyliques d'acides dicarboxyliques à insaturation éthylénique en α,β et à alkyle en $C_1$—$C_8$, b) au moins un monomère vinyl-aromatique et c) au moins un ester vinylique d'un acide monocarboxylique organique contenant de 2 à 11 atomes de carbone dans sa composante acide.

9. Mode d'exécution selon la revendication 8 caractérisé en ce que la composante B) est constituée d'au moins un composé copolymérisable pris dans l'ensemble constitué par l'acide acrylique, l'acrylate d'éthyl-2- hexyle, le méthacrylate de méthyle, le méthacrylate d'hydroxyéthyle, le styrène, l'acétate de vinyle et l'ester vinylique de l'acide Versatic.

10. Mode d'exécution selon l'une quelconque des revendications 1 à 9, caractérisé en ce que les copolymères ont des indices d'hydroxy de 30 à 200, de préférence de 45 à 180, plus spécialement de 10 à 140, et une viscosité, mesurée sous la forme d'une solution à 50%, de 200 à 3000, de préférence de 400 à 2500 mPa·s.

11. Application des copolymères selon la revendication 1 à la fabrication d'objets moulés et/ou de revêtements.

12. Application selon la revendication 11 comme peintures pour véhicules.

**Revendications pour l'Etat contractant: AT**

1. Procédé pour préparer des copolymères durcissables, procédé caractérisé en ce qu'on copolymérise:

A) de 5 à 95% en poids d'au moins un ester d'acide carbamoyloxy-alkyl-dicarboxylique polymérisable qui porte des radicaux hydroxy et qui répond à la formule générale I:

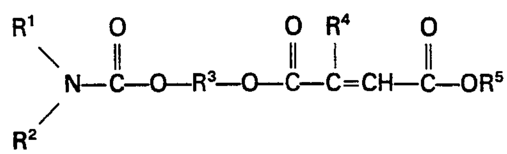

(I)

dans laquelle:

$R^1$ représente l'hydrogène, un alkyle où un hydroxyalkyle, chacun de ces radicaux contenant de 1 à 30 atomes de carbone dans la partie alkyle,

$R^2$ représente un alkyle, un hydroxyalkyle, chacun de ces radicaux contenant de 1 à 30 atomes de carbone dans la partie alkyle, ou un radical

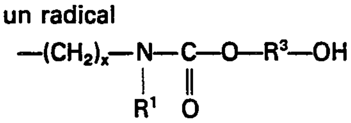

avec la condition que $R^1$ représente l'hydrogène et x un nombre entier de 2 à 10,

$R^3$ représente un alkylène linéaire ou ramifié qui contient de 2 à 5 atomes de carbone,

$R^4$ représente l'hydrogène ou un méthyle,

$R^5$ représente un hydroxyalkyle, un hydroxyamino-alkyle, chacun de ces radicaux contenant de 2 à 20 atomes de carbone dans la partie alkyle, ou un radical alkyle de ce genre qui contient également des radicaux d'esters et/ou d'éthers, et

B) de 5 à 95% en poids d'au moins un monomère copolymérisable pris dans l'ensemble constitué par

a) les acides monocarboxyliques à double liaison éthylénique en α,β, leurs esters alkyliques et hydroxyalkyliques qui contiennent chacun, dans la partie alkyle, de 1 à 18 atomes de carbone, leurs amides, leurs nitriles, ainsi que les esters monoalkyliques et dialkyliques d'acides dicarboxyliques à double liaison éthylénique en α,β qui contiennent de 1 à 18 atomes de carbone dans la partie alkyle,

b) les monomères vinyl-aromatiques,

c) les esters vinyliques des acides monocarboxyliques organiques qui contiennent de 1 à 8 atomes de carbone dans le radical d'acide carboxylique,

d) les esters glycidyliques des acides monocarboxyliques insaturés et des acides dicarboxyliques insaturés

la somme des proportions des composantes A) et B) étant toujours égale à 100% en poids, en présence:

C) de catalyseurs de polymérisation et éventuellement:

D) de régulateurs de masse moléculaire.

2. Procédé pour préparer les copolymères selon la revendication 1, procédé caractérisé en ce que la température de polymérisation est comprise entre 20 et 270°C, de préférence entre 60 et 180°C.

3. Procédé selon l'une des revendications 1 et 2, caractérisé en ce que les catalyseurs de polymérisation sont mis en jeu en des quantités de 0,01 à 5%, de préférence de 0,01 à 2%, et les régulateurs de masse moléculaires D) en des quantités de 0,01 à 2%, de préférence de 0,01 à 1%, en poids par rapport à la quantité totale des monomères.

4. Procédé selon l'une quelconque des revendications 1 à 3, caractérisé en ce que la proportion de la composante A) est de 10 à 70% en poids, et celle de la composante B) de 30 à 90% en poids.

5. Procédé selon l'une quelconque des revendications 1 à 4, caractérisé en ce que les monomères de la composante B) sont constitués de 0 à 95% en poids de monomères a), de 5 à 100% en poids de monomères b), de 0 à 95% en poids de monomères c) et de 0 à 50% en poids de monomères d), la somme des proportions des monomères étant toujours égale à 100%.

6. Procédé selon l'une quelconque des revendications 1 à 5, caractérisé en ce que la composante A) est un composé de formule I dans lequel:

$R^1$ représente l'hydrogène, un alkyle, un hydroxyalkyle, chacun de ces radicaux contenant de 2 à 20 atomes de carbone dans la partie alkyle,

$R^2$ représente un alkyle, un hydroxyalkyle, chacun de ces radicaux contenant de 2 à 20 atomes de carbone dans la partie alkyle, ou un radical

$$\begin{array}{l} -(CH_2)_x-\underset{\displaystyle R^1}{\underset{|}{N}}-\underset{\displaystyle O}{\underset{\|}{C}}-O-R^3-OH \end{array}$$

avec la condition que $R^1$ représente l'hydrogène et que x désigne un nombre entier de 2 à 6,

$R^3$ représente un alkylène contenant 2 ou 3 atomes de carbone,

$R^4$ représente l'hydrogène ou un méthyle,

$R^5$ représente un radical d'ester hydroxyalkylique qui dérive d'un acide gras saturé ramifié et dont le radical d'acide contient de 9 à 11 atomes de carbone, ou représente un hydroxyalkyle, chacun de ces radicaux contenant de 2 à 14 atomes de carbone dans la partie alkyle.

7. Procédé selon l'une quelconque des revendications 1 à 6, caractérisé en ce que la composante B) est constituée d'au moins un monomère copolymérisable pris dans l'ensemble comprenant: a) des acides monocarboxyliques à double liaison éthylénique en α,β et leurs esters alkyliques et hydroxyalkyliques à alkyle en $C_1$—$C_8$, des esters monoalkyliques ou dialkyliques d'acides dicarboxyliques à insaturation éthylénique en α,β et à alkyle en $C_1$—$C_8$, b) au moins un monomère vinyl-aromatique et c) au moins un ester vinylique d'un acide monocarboxylique organique contenant de 2 à 11 atomes de carbone dans sa composante acide.

8. Procédé selon la revendication 7 caractérisé en ce que la composante B) est constituée d'au moins un composé copolymérisable pris dans l'ensemble constitué par l'acide acrylique, l'acrylate d'éthyl-2 hexyle, le méthacrylate de méthyle, le méthacrylate d'hydroxyéthyle, le styrène, l'acétate de vinyle et l'ester vinylique de l'acide Versatic.

9. Procédé selon l'une quelconque des revendications 1 à 8, caractérisé en ce que les copolymères ont des indices d'hydroxy de 30 à 200, de préférence de 45 à 180, plus spécialement de 10 à 140, et une viscosité, mesurée sous la forme d'une solution à 50%, de 200 à 3000, de préférence de 400 à 2500 mPa·s.

10. Application des copolymères obtenus selon la revendication 1 à la fabrication d'objets moulés et/ou de revêtements.

11. Application selon la revendication 10 comme peintures pour véhicules.

**Claims for the Contracting States: BE CH DE FR GB IT LI NL SE**

1. A curable copolymer based on A) 5—95% by weight of at least one polymerizable carbamoyloxyalkyldicarboxylic acid ester, carrying hydroxyl groups, of the general formula I

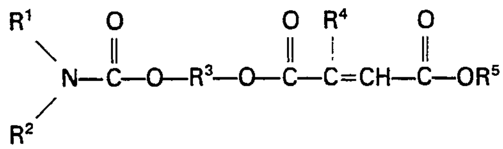
(I)

in which

$R^1$ represents hydrogen or alkyl or hydroxyalkyl having in each case 1 to 30 carbon atoms in the alkyl radical,

$R^2$ represents alkyl or hydroxyalkyl having in each case 1 to 30 carbon atoms in the alkyl radical, or the radical

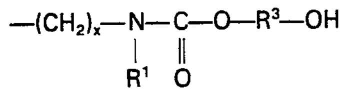

subject to the proviso that $R^1$ is hydrogen and x is an integer from 2 to 10,

$R^3$ represents linear or branched alkylene having 2 to 5 carbon atoms,

$R^4$ represents hydrogen or methyl and

$R^5$ represents hydroxyalkyl or hydroxyaminoalkyl having in each case 2 to 20 carbon atoms in the alkyl radical, or an alkyl radical of this type which also contains ester and/or ether groups, and

B) 5—95% by weight of at least one copolymerizable monomer belonging to the group comprising

a) an α,β-olefinically unsaturated monocarboxylic acid and alkyl and hydroxyalkyl esters thereof having in each case 1 to 18 carbon atoms in the alkyl radical, and amides and nitriles thereof, and also monoalkyl and dialkyl esters of α,β-olefinically unsaturated dicarboxylic acids having 1 to 18 carbon atoms in the alkyl radical.

b) vinyl-aromatic monomers,

c) vinyl esters of organic monocarboxylic acids having 1 to 18 carbon atoms in the carboxylic acid radical, and

d) glycidyl esters of unsaturated monocarboxylic and/or dicarboxylic acids,

the sum of the components A) and B) being in all cases 100% by weight.

2. A process for the preparation of the copolymers as claimed in claim 1, which comprises copolymerizing A) 5—95% by weight of at least one polymerizable carbamoyloxyalkyldicarboxylic acid ester, carrying hydroxyl groups, of the general formula I

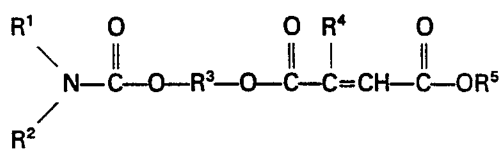
(I)

in which

$R^1$ represents hydrogen or alkyl or hydroxyalkyl having in each case 1 to 30 carbon atoms in the alkyl radical,

$R^2$ represents alkyl or hydroxyalkyl having in each case 1 to 30 carbon atoms in the alkyl radical, or the radical

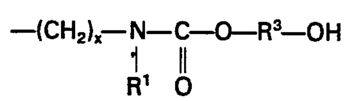

subject to the proviso that $R^1$ is hydrogen and x is an integer from 2 to 10,

$R^3$ represents linear or branched alkylene having 2 to 5 carbon atoms,

$R^4$ represents hydrogen or methyl, and

$R^5$ represents hydroxyalkyl or hydroxyaminoalkyl having in each case 2 to 20 carbon atoms in the alkyl radical, or an alkyl radical of this type which also contains ester and/or ether groups, and

B) 5—95% by weight of at least one copolymerizable monomer belonging to the group comprising

a) an α,β-olefinically unsaturated monocarboxylic acid and alkyl and hydroxy alkyl esters thereof having in each case 1 to 18, preferably 1 to 8, carbon atoms in the alkyl radical, and amides and nitriles thereof, and also monoalkyl and dialkyl esters of α,β-olefinically unsaturated dicarboxylic acids having 1 to 18 carbon atoms in the alkyl radical,

b) vinyl-aromatic monomers

c) vinyl esters of organic monocarboxylic acids having 1 to 18 carbon atoms in the carboxylic acid radical, and

d) glycidyl esters of unsaturated monocarboxylic and/or dicarboxylic acids,

the sum of the components A) and B) being in all cases 100% by weight, in the presence of

C) polymerization catalysts and, if appropriate,

D) molecular weight regulators.

3. The process for the preparation of the copolymers as claimed in claim 2, wherein the polymerization temperature is 20 to 270°C, preferably 60 to 180°C.

4. The process as claimed in claim 2 or 3, wherein the polymerization catalysts are employed in amounts of 0.01 to 5, preferably 0.01 to 2, % by weight and molecular weight regulators D) are employed in amounts of 0.01 to 2, preferably 0.01 to 1, % by weight, calculated on the total amount of monomers.

5. An embodiment as claimed in one or more of claims 1 to 4, wherein the proportion of the component A) is 10 to 70% by weight and that of the component B) is 30 to 90% by weight.

6. The embodiment as claimed in one or more of claims 1 to 5, wherein the monomers of component B) are composed of 0 to 95% by weight of the monomers a), 5 to 100% by weight of the monomers b), 0 to 95% by weight of the monomers c) and 0 to 50% by weight of the monomers d), the sum of the monomers being in all cases 100% by weight.

7. The embodiment as claimed in one or more of claims 1 to 6, wherein the component A) is a compound of the formula I in which

$R^1$ denotes hydrogen or alkyl or hydroxyalkyl having in each case 2 to 20 carbon atoms in the alkyl radical,

$R^2$ denotes alkyl or hydroxyalkyl having in each case 2 to 20 carbon atoms in the alkyl radical, or the radical

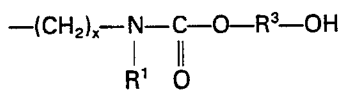

subject to the proviso that $R^1$ is hydrogen and x is an integer from 2 to 6,

$R^3$ denotes alkylene having 2 to 3 carbon atoms,

$R^4$ denotes hydrogen or methyl and

$R^5$ denotes a hydroxyalkyl ester radical of a branched, saturated fatty acid having 9 to 11 carbon atoms in the acid radical, or hydroxyalkyl, each having 2 to 14 carbon atoms in the alkyl group.

8. The embodiment as claimed in one or more of claims 1 to 7, wherein the component B) is composed of at least one copolymerizable monomer a) and α,β-olefinically unsaturated monocarboxylic acids and alkyl and hydroxyalkyl esters thereof having in each case 1 to 8 carbon atoms in the alkyl radical or monoalkyl or dialkyl esters of α,β-olefinically unsaturated dicarboxylic acids having 1 to 8 carbon atoms in the alkyl radical, b) at least one vinyl-aromatic monomer and c) at least one vinyl ester of organic monocarboxylic acids having 2 to 11 carbon atoms in the acid embodiment.

9. The embodiment as claimed in claim 8, wherein the component B) is composed of at least one copolymerizable compound belonging to the group comprising acrylic acid, 2-ethylhexylacrylate, methlmethacrylate, hydroxyethylmethacrylate, styrene, vinyl acetate and the vinyl ester of Versatic acid.

10. The embodiment as claimed in one or more of claims 1 to 9, wherein the copolymers have OH numbers from 30 to 200, preferably 45 to 180 and especially 50 to 140, and the viscosity, as a 50% strength solution, is 200 to 3,000, preferably 400 to 2,500, mPa·s.

11. The use of the copolymers as claimed in claim 1 for the preparation of shaped articles and/or coatings.

12. Use as claimed in claim 11 as vehicle lacquers.

**Claims for the Contracting State: AT**

1. A process for the preparation of a curable copolymer, which comprises copolymerizing A) 5—95% by weight of at least one polymerizable carbamoyloxyalkyldicarboxylic acid ester, carrying hydroxyl groups, of the general formula I

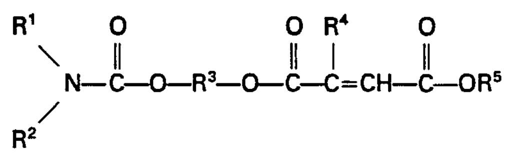

(I)

in which

$R^1$ represents hydrogen or alkyl or hydroxyalkyl having in each case 1 to 30 carbon atoms in the alkyl radical,

$R^2$ represents alkyl or hydroxyalkyl having in each case 1 to 30 carbon atoms in the alkyl radical, or the radical

$$-(CH_2)_x-\underset{R^1}{\underset{|}{N}}-\underset{O}{\underset{\|}{C}}-O-R^3-OH$$

subject to the proviso that $R^1$ is hydrogen and x is an integer from 2 to 10,

$R^3$ represents linear or branched alkylene having 2 to 5 carbon atoms,

$R^4$ represents hydrogen or methyl and

$R^5$ represents hydroxyalkyl or hydroxyaminoalkyl having in each case 2 to 20 carbon atoms in the alkyl radical, or an alkyl radical of this type which also contains ester and/or ether groups, and

B) 5—95% by weight of at least one copolymerizable monomer belonging to the group comprising

a) an α,β-olefinically unsaturated monocarboxylic acid and alkyl and hydroxyalkyl esters thereof having in each case 1 to 18, preferably 1 to 8, carbon atoms in the alkyl radical, and amides and nitriles thereof, and also monoalkyl and dialkyl esters of α,β-olefinically unsaturated dicarboxylic acids having 1 to 18 carbon atoms in the alkyl radical,

b) vinyl-aromatic monomers,

c) vinyl esters of organic monocarboxylic acids having 1 to 18 carbon atoms in the carboxylic acid radical, and

d) glycidyl esters of unsaturated monocarboxylic and/or dicarboxylic acids,

the sum of the components A) and B) being in all cases 100% by weight, in the presence of

C) polymerization catalysts and, if appropriate,

D) molecular weight regulators.

2. The process for the preparation of the copolymers as claimed in claim 1, wherein the polymerization temperature is 20 to 270°C, preferably 60 to 180°C.

3. The process as claimed in claim 1 or 2, wherein the polymerization catalysts are employed in amounts of 0.01 to 5, preferably 0.01 to 2, % by weight and molecular weight regulators D) are employed in amounts of 0.01 to 2, preferably 0.01 to 1, % by weight, calculated on the total amount of monomers.

4. The process as claimed in one or more of claims 1 to 3, wherein the proportion of the component A) is 10 to 70% by weight and that of the component B) is 30 to 90% by weight.

5. The embodiment as claimed in one or more of claims 1 to 4, wherein the monomers of component B) are composed of 0 to 95% by weight of the monomers a), 5 to 100% by weight of the monomers b), 0 to 95% by weight of the monomers c) and 0 to 50% by weight of the monomers d), the sum of the monomers being in all cases 100% by weight.

6. The process as claimed in one or more of claims 1 to 5, wherein the component A) is a compound of the formula I in which

$R^1$ denotes hydrogen or alkyl or hydroxyalkyl having in each case 2 to 20 carbon atoms in the alkyl radical,

$R^2$ denotes alkyl or hydroxyalkyl having in each case 2 to 20 carbon atoms in the alkyl radical, or the radical

$$-(CH_2)_x-\underset{R^1}{\underset{|}{N}}-\underset{O}{\underset{\|}{C}}-O-R^3-OH$$

subject to the proviso that $R^1$ is hydrogen and x is an integer from 2 to 6,

$R^3$ denotes alkylene having 2 to 3 carbon atoms,

$R^4$ denotes hydrogen or methyl and

$R^5$ denotes a hydroxyalkyl ester radical of a branched, saturated fatty acid having 9 to 11 carbon atoms in the acid radical, or hydroxyalkyl, each having 2 to 14 carbon atoms in the alkyl group.

7. The process as claimed in one or more of claims 1 to 6, wherein the component B) is composed of at least one copolymerizable monomer a) and α,β-olefinically unsaturated monocarboxylic acids and alkyl and hydroxyalkyl esters thereof having in each case 1 to 8 carbon atoms in the alkyl radical or monoalkyl or dialkyl esters of α,β-olefinically unsaturated dicarboxylic acids having 1 to 8 carbon atoms in the alkyl radical, b) at least one vinyl-aromatic monomer and c) at least one vinyl ester of organic monocarboxylic acids having 2 to 11 carbon atoms in the acid embodiment.

8. The process as claimed in claim 7, wherein the component B) is composed of at least one copolymerizable compound belonging to the group comprising acrylic acid, 2-ethylhexylacrylate, methlmethacrylate, hydroxyethylmethacrylate, styrene, vinyl acetate and the vinyl ester of Versatic acid.

9. The process as claimed in one or more of claims 1 to 8, wherein the copolymers have OH numbers from 30 to 200, preferably 45 to 180 and especially 50 to 140, and the viscosity, as a 50% strength solution, is 200 to 3,000, preferably 400 to 2,500, mPa.s.

10. The use of the copolymers as claimed in claim 1 for the preparation of shaped articles and/or coatings.

11. Use as claimed in claim 10 as vehicle lacquers.